# EUROPEAN PATENT APPLICATION

(11) **EP 4 531 306 A1**
(43) Date of publication of application: **02.04.2025**
(21) Application number: 23200162.8
(22) Date of filing: 27.09.2023
(51) Int. Cl.: H04B 10/516, H04B 10/118

(54) **OPTICAL GROUND TERMINAL OPTICAL TRANSMISSION SYSTEM AND AN OPTICAL GROUND TERMINAL**

(71) Applicant: NKT Photonics A/S, 3460 Birkerød (DK)
(72) Inventor: YARROW, Michael, Southampton, SO31 4RA (GB)
(74) Representative: Zacco Denmark A/S

(57) **Abstract**

An optical ground terminal optical transmission system (100) comprises:
an optical source (102) configured to generate a cw seed laser signal;
a phase modulator (104) operative to phase modulate the cw seed laser signal to spectrally broaden the seed laser signal;
intensity modulation apparatus (110) operative to intensity modulate the cw seed laser signal responsive to at least one control signal to form an optical beacon and data signal;
a control signal source (112) configured to provide at least one control signal to the intensity modulation apparatus, the control signal configured to cause the intensity modulation apparatus to intensity modulate the seed laser signal with a beacon modulation signal and an uplink data signal to form an optical beacon and data signal; and
optical amplifier apparatus (114) configured to amplify the optical beacon and data signal, to form an optical beacon and data signal for transmission.

## Description

### Technical Field

The invention relates to an optical ground terminal optical transmission system. The invention further relates to an optical ground terminal comprising the optical ground terminal optical transmission system.

### Background

Free space optical communications offer many advantages over conventional RF communications for space-to-ground and ground-to-space communications, for example to Low Earth Orbiting (LEO) satellites or space missions. For example: there is currently no licencing required for the optical spectrum; it provides point-to-point secure communications, with a low chance of interference or interception; a narrow optical beam is more efficient - lower power, lower cost, smaller and lighter - than an RF transmitter; optical receivers can also be smaller and lighter compared to RF antennas; they enable higher efficiency longer range communications, including to deep space missions; and optical communications also opens the door to optical quantum key distribution for secure communications.

Free-space optical communications systems for space-to-ground and ground-to-space communications require optical ground terminals (OGT) with optical transmission systems for transmitting beacon signals for pointing, acquisition and tracking (PAT) and data transmission signals for transmitting uplink data. Shaif-ul Alam et al., "Beacon system for ESA IZN-1 Optical Ground Station", IEEE International Conference on Space Optical Systems and Applications (ICSOS), 28-31 March 2022 describes a beacon system for satellite optical communications developed for the European Space Agency (ESA) IZN-1 Optical Ground Station in Tenerife. The system provides a CCSDS standard compatible 1590 nm beacon signal at two selectable beacon modulation frequencies (10 and 100 kHz) to support optical acquisition of two CubeSat missions in low Earth orbits. US 2013/0156439 A1 describes a method for optical data transmission from low earth orbit to earth and a corresponding communication system having a downlink data channel, an uplink data channel and a PAT subsystem including a ground beacon comprising a wide angle beam for acquisition and a guidance beam for tracking, and where the ground beacon for the uplink channel is a pulse position modulated PPM channel.

The physical layer characteristics for free-space optical communications systems for space missions are defined in The Consultative Committee for Space Data Systems draft recommended standard "Optical Communications Physical Layer", for example version CCSDS 141.0-P-1.1. Interoperability specifications for optical communications systems, including space-to-ground free-space optical communications, employed by the US Space Development Agency, SDA, are defined in the SDA "Optical Communications Terminal (OCT) Standard", for example version 3.0.

### Summary

It is an object to provide an improved optical ground terminal optical transmission system. It is a further object to provide an improved optical ground terminal.

An aspect provides an optical ground terminal, OGT, optical transmission system comprising an optical source, a phase modulator, intensity modulation apparatus, a control signal source and optical amplifier apparatus. The optical source is configured to generate a cw seed laser signal having an initial spectral linewidth and an initial optical power. The phase modulator is operative to phase modulate the cw seed laser signal to spectrally broaden the seed laser signal to an output spectral linewidth, greater than the initial spectral linewidth. The intensity modulation apparatus is operative to intensity modulate the cw seed laser signal responsive to at least one control signal to form an optical beacon and data signal. The control signal source is configured to provide at least one control signal to the intensity modulation apparatus. The at least one control signal is configured to cause the intensity modulation apparatus to intensity modulate the seed laser signal with a beacon modulation signal and an uplink data signal to form an optical beacon and data signal. The optical amplifier apparatus is configured to amplify the optical beacon and data signal to an output optical power, higher than the initial optical power, to form an optical beacon and data signal for transmission. The optical amplifier apparatus comprises an active optical fibre and a pump laser.

The OGT optical transmission system may advantageously enable a beacon signal and uplink data to be transmitted on a single optical beam from an OGT, thus simplifying the telescope optics required to transmit the optical signal towards a satellite, space station, lunar base, Martian base, or spacecraft. A combined optical beacon and data signal may enable pointing, acquisition and tracking to be performed using the same optical system as uplink data transmission, and may enable tracking to continue to be performed during uplink data transmission. Spectrally broadening the seed laser signal may advantageously mitigate stimulated Brillouin scattering, SBS, in the optical amplifier fibre.

In an embodiment, the intensity modulation apparatus comprises an intensity modulator and an intensity modulator driver. This may enable a complex intensity modulation to be applied, i.e. a beacon signal combined with a data signal, or a single high or low frequency modulation, i.e. beacon frequency or data, to be applied to the seed laser signal.

In an embodiment, the intensity modulation apparatus comprises one of an acousto-optic modulator, AOM, an electro-optic modulator, EOM, or a semi-conductor optical amplifier, SOA, and an intensity modulator driver. This may enable a complex intensity modulation to be applied, i.e. a beacon signal combined with a data signal, or a single high or low frequency modulation, i.e. beacon modulation frequency or data, to be applied to the seed laser signal.

In an embodiment, the intensity modulation apparatus comprises the pump laser for the optical amplifier. The pump laser comprises a diode laser and a diode laser driver. The diode laser driver is operative to provide a drive signal to the diode laser responsive to the at least one control signal. This may enable a low frequency, i.e. beacon modulation frequency, to be applied to the seed laser signal by modulating the amplification applied by the optical amplifier.

In an embodiment, the control signal source is configured to provide one control signal to the intensity modulation apparatus. The control signal comprises an uplink data signal combined with a beacon modulation signal. This may enable a complex intensity modulation to be applied to the seed laser signal to form the uplink data signal combined with a beacon modulation signal in a single stage.

In an embodiment, the control signal source is configured to receive an uplink data signal from an external source and is configured to combine the uplink data signal with a beacon modulation signal to form the control signal. This may advantageously enable uplink data for transmission to be provided by a mission control system or an external communications system.

In an embodiment, the pump laser comprises a diode laser and a diode laser driver. The diode laser driver is operative to provide a drive signal to the diode laser responsive to a first control signal. The intensity modulator, the intensity modulator driver and the pump laser together comprise the intensity modulation apparatus. The control signal source is configured to provide the first control signal to the diode laser driver and to provide a second control signal to the intensity modulator driver. The first control signal and the second control signal together cause the intensity modulation apparatus to intensity modulate the seed laser signal with a beacon modulation signal and an uplink data signal. This may advantageously enable the beacon modulation frequency and uplink data for transmission to be applied to the seed laser signal independent of one another to form the combined signal for transmission.

In an embodiment, the first control signal is an uplink data signal and the second control signal is a beacon modulation signal. This may enable uplink data at bit rates of up to 20 Gbps to be transmitted together with a beacon modulation at a frequency in the range 1kHz to 100 kHz in the combined signal.

In an embodiment, the first control signal is a beacon modulation signal and the second control signal is an uplink data signal. This may enable uplink data at bit rates of up to 20 Gbps to be transmitted together with a beacon modulation at a frequency in the range 1 kHz to 100 kHz in the combined signal.

In an embodiment, the OGT optical transmission system further comprises an optical splitter prior to the optical amplifier apparatus. The optical splitter is configured to split the seed laser signal into a plurality of replica signals. The system OGT optical transmission system further comprises a plurality of optical amplifier apparatus configured to amplify replica signals. This may advantageously enable the replica signals to be combined to form a high power optical beacon and data signal, which may enable the signal to be transmitted over a greater distance, for example to a lunar base or a Martian base, or to a deep space satellite or spacecraft. This may also enable formation of a plurality of optical beacon and data signals for transmission from multiple output apertures or telescopes suitably spaced apart, which may advantageously make transmission of the optical beacon and data signal more resilient to atmospheric turbulence effects. Spectrally broadening the seed laser signal may advantageously reduce the coherence length of the optical beacon and data signals so that mutual interference effects are avoided in a multi-aperture OGT OTS.

In an embodiment, the control signal source further comprises timing circuitry configured to synchronize the second control signal with the first control signal. This may enable an uplink data signal to be transmitted with an on-off modulated beacon modulation, ensuring that data is not lost, as well as with non-return-to-zero and sinusoidal modulated beacon modulations.

In an embodiment, the control signal source is configured to receive at least one of the uplink data signal and the beacon modulation signal from at least one external source. This may advantageously enable uplink data for transmission or a beacon modulation signal to be provided by a mission control system or an external communications system.

In an embodiment, the control signal source is configured to generate at least one of the uplink data signal and the beacon modulation signal.

In an embodiment, the OGT optical transmission system further comprises at least one delivery optical fibre and output optics at a distal end of the delivery optical fibre. The at least one delivery optical fibre is one of a large mode-area microstructured optical fibre, a hollow core microstructured optical fibre or a step-index optical fibre. The at least one delivery optical fibre is configured to deliver the optical beacon and data signal for transmission to the output optics. This may enable the output optics to be provided at a distance from the rest of the components of the OGT optical transmission system. This may enable the rest of the components of the OGT optical transmission system to be located remotely from the output optics, which may for example be located within a telescope, in a controlled environment so that they are not subjected to extreme environmental conditions within the telescope dome (hot, cold, ice, rain, humidity). Use of a large mode area micro-structured fibre or hollow core micro-structured fibre may enable a longer length of delivery optical fibre while mitigating non-linear effects such as Stimulated Brillouin Scattering, SBS, and Self Phase Modulation, SPM. Spectrally broadening the seed laser signal may also advantageously mitigate SBS in the delivery optical fibre.

Corresponding embodiments and advantages also apply to the optical ground terminal described below.

An aspect provides an optical ground terminal, OGT, comprising an OGT optical transmission system. The OGT optical transmission system comprises an optical source, a phase modulator, intensity modulation apparatus, a control signal source and optical amplifier apparatus. The optical source is configured to generate a cw seed laser signal having an initial spectral linewidth and an initial optical power. The phase modulator is operative to phase modulate the cw seed laser signal to spectrally broaden the seed laser signal to an output spectral linewidth, greater than the initial spectral linewidth. The intensity modulation apparatus is operative to intensity modulate the cw seed laser signal responsive to at least one control signal to form an optical beacon and data signal. The control signal source is configured to provide at least one control signal to the intensity modulation apparatus. The at least one control signal is configured to cause the intensity modulation apparatus to intensity modulate the seed laser signal with a beacon modulation signal and an uplink data signal to form an optical beacon and data signal. The optical amplifier apparatus is configured to amplify the optical beacon and data signal to an output optical power, higher than the initial optical power, to form an optical beacon and data signal for transmission. The optical amplifier apparatus comprises an active optical fibre and a pump laser.

Embodiments of the invention will now be described, by way of example only, with reference to the accompanying drawings.

### Brief Description of the drawings

Figures 1 to 6 are block diagrams illustrating embodiments of OGT optical transmission systems; and
Figure 7 is a block diagram illustrating an embodiment of an OGT.

### Detailed description

The same reference numbers will be used for corresponding features in different embodiments.

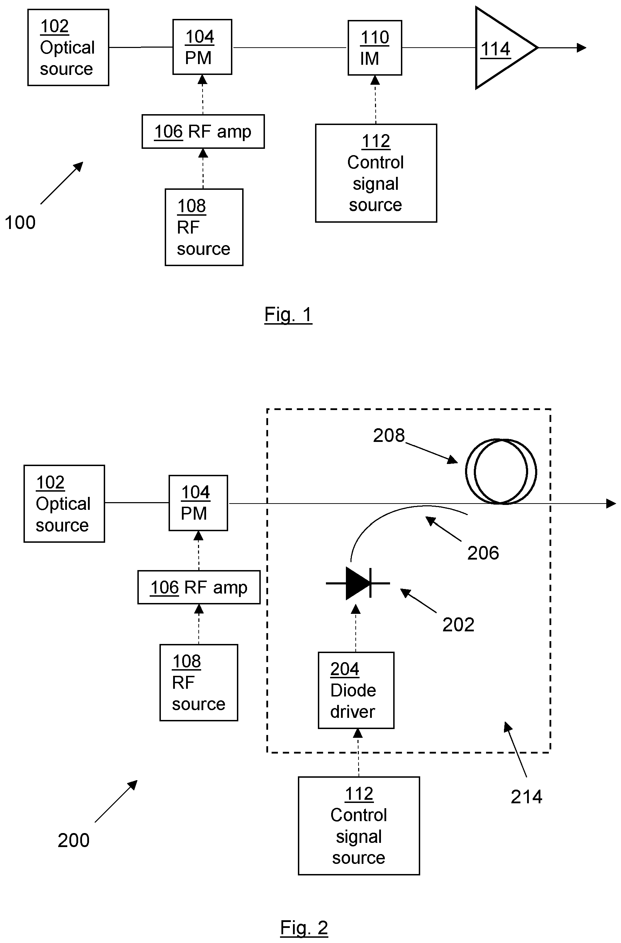

Referring to Figure 1, an embodiment provides an optical ground terminal, OGT, optical transmission system, OTS, 100 comprising an optical source 102, a phase modulator 104, an intensity modulator, IM, 110, a control signal source 112 and an optical amplifier 114.

The optical source comprises a seed laser 102 configured to generate a cw seed laser signal having an initial spectral linewidth and an initial optical power. The seed laser may, for example, be a distributed feedback, DFB, fibre laser or a DFB laser diode, such as a NKT Photonics BASIK Y10 DBF fibre laser operative to generate a single frequency cw seed laser signal at 1064nm, having a Lorentzian linewidth of < 20kHz and an optical power of 10mW.

The phase modulator 104 is operative to phase modulate the cw seed laser signal to spectrally broaden the seed laser signal to an output spectral linewidth, greater than the initial spectral linewidth, for example 50 GHz (200pm) The phase modulator 104 is driven by an RF drive signal generated by an RF source 108, which may be an RF noise source or a sinusoidal RF signal source, and amplified by an RF amplifier 106.

The control signal source 112 is configured to provide a control signal to the IM 110. The IM 110 is driven by the control signal. The IM is operative to intensity modulate the cw seed laser signal responsive to the control signal. The control signal is a combined uplink data and beacon modulation signal i.e. an uplink data signal combined with a beacon modulation signal. The control signal causes the IM to intensity modulate the seed laser signal with the combined uplink data and beacon modulation signal to form an optical beacon and data signal for transmission.

The IM 110 comprises one of an acousto-optic modulator, AOM, an electro-optic modulator, EOM, or a semi-conductor optical amplifier, SOA.

The optical amplifier 114 is configured to amplify the optical beacon and data signal to an output optical power, higher than the initial optical power, to form an optical beacon and data signal for transmission. The optical amplifier is an optical fibre amplifier comprising an active optical fibre and a pump laser.

Referring to Figure 2, an embodiment provides an OGT OTS 200 comprising an optical source 102, a phase modulator 104, a control signal source 112, intensity modulation apparatus and optical amplifier apparatus 214.

The optical source 102 is configured to generate a cw seed laser signal having an initial spectral linewidth and an initial optical power, as described above.

The phase modulator 104 is operative to phase modulate the cw seed laser signal to spectrally broaden the seed laser signal and is driven by an RF drive signal, generated by an RF source 108 and amplified by an RF amplifier 106, as described above.

The optical amplifier apparatus 214 comprises an active optical fibre 208 and a pump laser comprising a diode laser 202, a diode laser driver 204 and an optical fibre coupler 206.

The control signal source is configured to provide a combined uplink data and beacon modulation signal.

The intensity modulation apparatus comprises the pump laser. The diode laser driver 204 is operative to provide a drive signal to the diode laser 202 responsive to a control signal received from the control signal source 112. The control signal is configured to cause the diode laser driver 204 to provide a drive signal to the diode laser 202 to generate a pump signal that is intensity modulated with the combined uplink data and beacon modulation signal. The pump signal is coupled into the active optical fibre 208 via the optical fibre coupler 206. The intensity modulation of the pump signal causes a corresponding modulation of the amount of amplification applied to the cw seed laser signal as it travels through the active optical fibre, resulting in the cw seed laser signal being intensity modulated with the combined uplink data and beacon modulation signal, to form an optical beacon and data signal for transmission.

In an embodiment, the control signal source 112 is configured to receive the uplink data signal from an external source. The control signal source is configured to combine the uplink data signal with a beacon modulation signal to form the combined uplink data and beacon modulation signal. The control signal source may be configured to generate the beacon modulation signal and combine it with the uplink data signal, or may be configured to receive the beacon modulation signal from an external source and combine it with the uplink data signal.

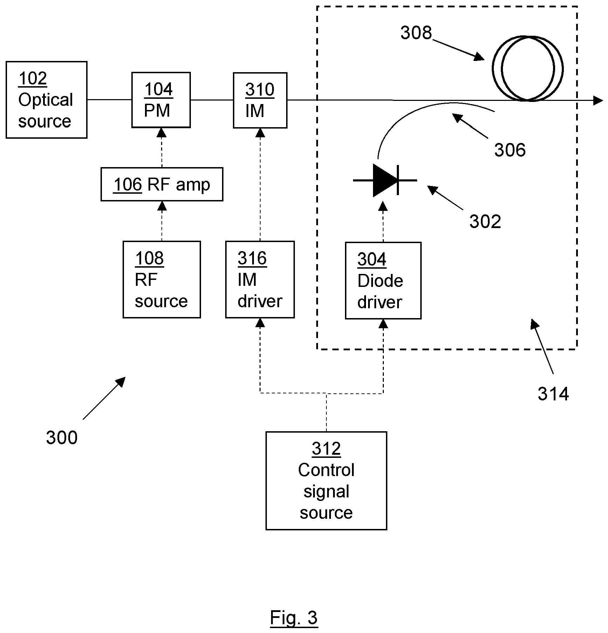

Referring to Figure 3, an embodiment provides an OGT OTS 300 comprising an optical source 102, a phase modulator 104, a control signal source 312, an intensity modulator, IM, 310, an IM driver 316 and optical amplifier apparatus 314.

The optical source comprises a seed laser 102 configured to generate a cw seed laser signal having an initial spectral linewidth and an initial optical power, as described above.

The phase modulator 104 is operative to phase modulate the cw seed laser signal to spectrally broaden the seed laser signal and is driven by an RF drive signal, generated by an RF source 108 and amplified by an RF amplifier 106, as described above.

The optical amplifier apparatus 314 comprises an active optical fibre 308 and a pump laser comprising a diode laser 302, a diode laser driver 304 and an optical fibre coupler 306. The diode laser driver is operative to provide a drive signal to the diode laser responsive to a first control signal received from the control signal source.

The IM 310, IM driver 316, diode laser 302 and diode laser driver 304 together comprise the intensity modulation apparatus. The IM 310 may be an AOM, an EOM or an SOA.

The control signal source 312 is configured to provide the first control signal to the diode laser driver 304. The control signal source 312 is configured also to provide a second control signal to the IM driver 316.

The IM driver 316 is operative to provide a drive signal to the IM 310. The second control signal is an uplink data signal. The uplink data signal causes the IM driver 316 to provide a second drive signal to the IM 310 to intensity modulate the cw seed laser signal with the uplink data signal, to form an optical data signal.

The first control signal is a beacon modulation signal. The diode laser driver 304 is operative to provide a drive signal to the diode laser 302 responsive to the beacon modulation signal. The beacon modulation signal causes the diode laser driver 304 to provide a drive signal to the diode laser 302 to generate a pump signal that is intensity modulated with the beacon modulation signal. The pump signal is coupled into the active optical fibre 308 via the optical fibre coupler 306. The intensity modulation of the pump signal causes a corresponding modulation of the amount of amplification applied to the optical data signal as it travels through the active optical fibre, resulting in the optical data signal being over modulated with the beacon modulation signal, to form an optical beacon and data signal for transmission.

The first control signal and the second control signal thus together cause the intensity modulation apparatus to intensity modulate the cw seed laser signal with a beacon modulation signal and an uplink data signal, to form an optical beacon and data signal for transmission.

In an alternative embodiment, the first control signal is an uplink data signal and the second control signal is a beacon modulation signal. The beacon modulation signal causes the IM driver 316 to provide a second drive signal to the IM 310 to intensity modulate the cw seed laser signal with the beacon modulation signal, to form an optical beacon signal. The uplink data signal causes the diode laser driver 304 to provide a drive signal to the diode laser 302 to generate a pump signal that is intensity modulated with the uplink data signal. The pump signal is coupled into the active optical fibre 308 via the optical fibre coupler 306. The intensity modulation of the pump signal causes a corresponding modulation of the amount of amplification applied to the optical beacon signal as it travels through the active optical fibre, resulting in the optical beacon signal being over modulated with the uplink data signal, to form an optical beacon and data signal for transmission.

In an embodiment, the control signal source 312 further comprises timing circuitry configured to synchronize the uplink data signal with the beacon modulation signal. In the case where the beacon modulation signal is on-off modulated uplink data can only be overmodulated with the optical beacon signal when the optical beacon signal is high. Therefore the uplink data signal needs to be synchronised with the beacon modulation signal so that data is not attempted to be overmodulated onto the beacon modulation signal when it is off, resulting in lost data.

In the case where the beacon modulation signal has a non-return to zero, NRZ, or a sinusoidal modulation uplink data can be transmitted continuously and synchronisation is not an issue

In an embodiment, the control signal source 312 is configured to receive the uplink data signal from an external source. The control signal source is configured to combine the uplink data signal with a beacon modulation signal to form the control signal. The control signal source may be configured to generate the beacon modulation signal and combine it with the uplink data signal, or may be configured to receive the beacon modulation signal from an external source and combine it with the uplink data signal.

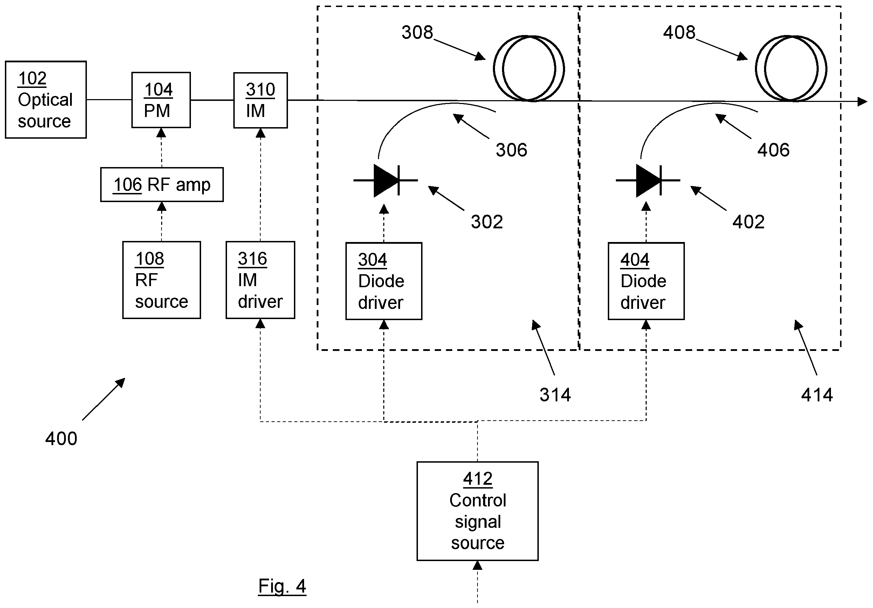

Referring to Figure 4, an embodiment provides an OGT OTS 400 comprising an optical source 102, a phase modulator 104, a control signal source 412, an intensity modulator, IM, 310, an IM driver 316, optical amplifier apparatus 314 and second optical amplifier apparatus 414.

The optical source 102, phase modulator 104, intensity modulator, IM, 310, IM driver 316, and optical amplifier apparatus 314 are as described above. In this embodiment, the optical amplifier apparatus 314 outputs an optical beacon and data signal to the second optical amplifier apparatus 414.

The second optical amplifier apparatus 414 comprises a second active optical fibre 408 and a second pump laser comprising a second diode laser 402, a second diode laser driver 404 and a second optical fibre coupler 406. The second diode laser driver 404 is operative to provide a second drive signal to the diode laser 402 responsive to a third control signal comprising the beacon modulation signal. The beacon modulation signal causes the diode laser driver 404 to provide a second drive signal to the second diode laser 402 to generate a second pump signal that is intensity modulated with the beacon modulation signal. The second pump signal is coupled into the second active optical fibre 408 via the second optical fibre coupler 406. The intensity modulation of the second pump signal causes a corresponding modulation of the amount of amplification applied to the optical beacon and data signal received from the optical amplifier apparatus 314 as it travels through the second active optical fibre. The intensity of the beacon modulation within the optical beacon and data signal is thereby increased, to form an optical beacon and data signal for transmission.

The control signal source 412 further comprises timing circuitry configured to time the third control signal relative to the first control signal, so that the beacon modulation of the second pump signal is synchronized with the beacon modulation of the optical beacon and data signal received from the optical amplifier apparatus 314.

The first control signal, second control signal and third control signal thus together cause the intensity modulation apparatus to intensity modulate the cw seed laser signal with a beacon modulation signal and an uplink data signal, to form an optical beacon and data signal for transmission.

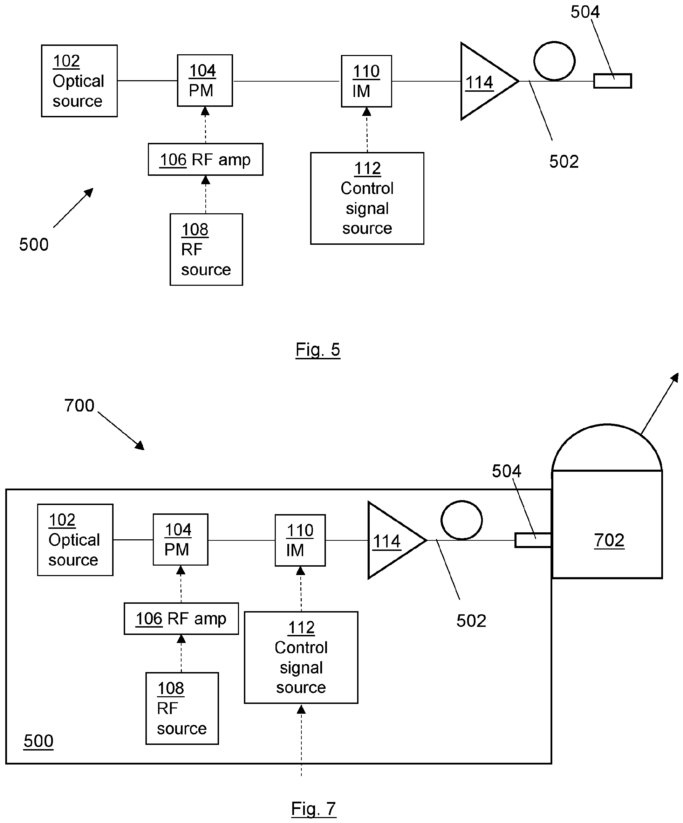

Referring to Figure 5, an embodiment provides an optical ground terminal, OGT, optical transmission system, OTS, 500 comprising an optical source 102, a phase modulator 104, an intensity modulator, IM, 110, a control signal source 112 and an optical amplifier 114, as described above.

The OGT OTS 500 further comprises a delivery optical fibre 502 and output optics 504 at a distal end of the delivery optical fibre. The delivery optical fibre is a large mode-area microstructured optical fibre, a hollow core microstructured optical fibre or a step-index optical fibre. The delivery optical fibre is configured to deliver the optical beacon and data signal for transmission to the output optics.

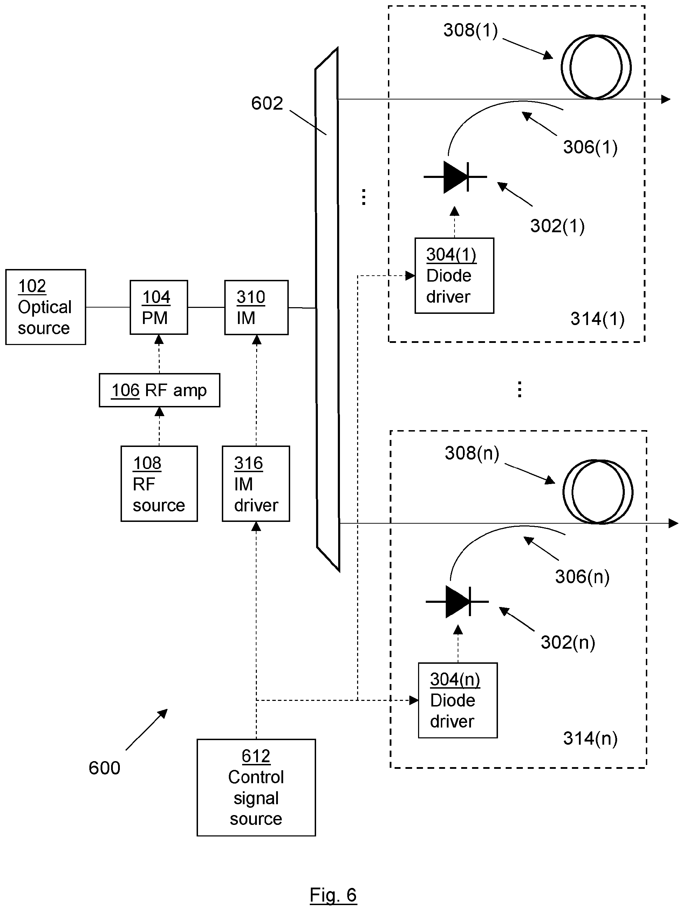

Referring to Figure 6, an embodiment provides an OGT OTS 600 comprising an optical source 102, a phase modulator 104, a control signal source 612, an intensity modulator, IM, 310, an IM driver 316, an optical splitter 602, and a plurality, n, of optical amplifier apparatus 314.

The optical source comprises a seed laser 102 configured to generate a cw seed laser signal having an initial spectral linewidth and an initial optical power, as described above.

The phase modulator 104 is operative to phase modulate the cw seed laser signal to spectrally broaden the seed laser signal and is driven by an RF drive signal, generated by an RF source 108 and amplified by an RF amplifier 106, as described above.

Each optical amplifier apparatus 314 comprises an active optical fibre 308 and a pump laser comprising a diode laser 302, a diode laser driver 304 and an optical fibre coupler 306. Each diode laser driver is operative to provide a drive signal to the respective diode laser responsive to a first control signal received from the control signal source.

The IM 310, IM driver 316, diode lasers 302 and diode laser drivers 304 together comprise the intensity modulation apparatus. The IM 310 may be an AOM, an EOM or an SOA.

The control signal source 612 is configured to provide a first control signal to each diode laser driver 304. The control signal source 612 is configured also to provide a second control signal to the IM driver 316.

The IM driver 316 is operative to provide a drive signal to the IM 310. The second control signal is an uplink data signal. The uplink data signal causes the IM driver 316 to provide a second drive signal to the IM 310 to intensity modulate the cw seed laser signal with the uplink data signal, to form an optical data signal.

The first control signal is a beacon modulation signal. Each diode laser driver 304 is operative to provide a drive signal to the respective diode laser 302 responsive to the beacon modulation signal. The beacon modulation signal causes each diode laser driver 304 to provide a drive signal to the respective diode laser 302 to generate a respective pump signal that is intensity modulated with the beacon modulation signal. The pump signal is coupled into the respective active optical fibre 308 via the respective optical fibre coupler 306.

The optical splitter 602 power splits the optical data signal into a plurality of replica optical data signals, and routes the replica optical data signals to respective optical amplifier apparatus. At each optical amplifier apparatus, the intensity modulation of the respective pump signal causes a corresponding modulation of the amount of amplification applied to the relevant replica optical data signal as it travels through the respective active optical fibre, resulting in the replica optical data signal being over modulated with the beacon modulation signal, to form a respective optical beacon and data signal for transmission.

The optical splitter 602 and the first control signal and the second control signal together cause the intensity modulation apparatus to intensity modulate the cw seed laser signal with a beacon modulation signal and an uplink data signal, to form an plurality of optical beacon and data signals for transmission.

The plurality of optical beacon and data signals may be combined using, for example coherent beam combining, to form a higher power, combined optical beacon and data signal for transmission.

Referring to Figure 7, an embodiment provides an optical ground terminal, OGT, 700 comprising an OGT OTS 500 as described above and a telescope 702. The telescope 702 is configured to receive the optical beacon and data signal for transmission from the output optics 504 of the OGT OTS and to direct the optical beacon and data signal for transmission towards a satellite, space station, lunar base or spacecraft.

## Claims

1. An optical ground terminal optical transmission system comprising:
an optical source configured to generate a cw seed laser signal having an initial spectral linewidth and an initial optical power;
a phase modulator operative to phase modulate the cw seed laser signal to spectrally broaden the seed laser signal to an output spectral linewidth, greater than the initial spectral linewidth;
intensity modulation apparatus operative to intensity modulate the cw seed laser signal responsive to at least one control signal to form an optical beacon and data signal;
a control signal source configured to provide at least one control signal to the intensity modulation apparatus, wherein the at least one control signal is configured to cause the intensity modulation apparatus to intensity modulate the seed laser signal with a beacon modulation signal and an uplink data signal to form an optical beacon and data signal; and
optical amplifier apparatus configured to amplify the optical beacon and data signal to an output optical power, higher than the initial optical power, to form an optical beacon and data signal for transmission, the optical amplifier apparatus comprising an active optical fibre and a pump laser.

2. The system of claim 1, wherein the intensity modulation apparatus comprises an intensity modulator, such as an acousto-optic modulator, AOM, an electro-optic modulator, EOM, or a semi-conductor optical amplifier, SOA, and intensity modulator driver.

3. The system of claim 1, wherein the intensity modulation apparatus comprises the pump laser, the pump laser comprising a diode laser and a diode laser driver, and the diode laser driver is operative to provide a drive signal to the diode laser responsive to said at least one control signal.

4. The system of claim 2 or claim 3, wherein the control signal source is configured to provide one control signal to the intensity modulation apparatus, said control signal comprising an uplink data signal combined with a beacon modulation signal.

5. The system of claim 4, wherein the control signal source is configured to receive an uplink data signal from an external source and is configured to combine the uplink data signal with a beacon modulation signal to form the control signal.

6. The system of claim 2, wherein:
the pump laser comprises a diode laser and a diode laser driver, and the diode laser driver is operative to provide a drive signal to the diode laser responsive to a first control signal;
the intensity modulator, the intensity modulator driver and the pump laser together comprise the intensity modulation apparatus; and
the control signal source is configured to provide the first control signal to the diode laser driver and to provide a second control signal to the intensity modulator driver, the first control signal and the second control signal together causing the intensity modulation apparatus to intensity modulate the seed laser signal with a beacon modulation signal and an uplink data signal.

7. The system of claim 6, wherein the first control signal is an uplink data signal and the second control signal is a beacon modulation signal.

8. The system of claim 6, wherein the first control signal is a beacon modulation signal and the second control signal is an uplink data signal.

9. The system of any one of the preceding claims further comprising an optical splitter prior to the optical amplifier apparatus, the optical splitter configured to split the seed laser signal into a plurality of replica signals, and wherein the system comprises a plurality of optical amplifier apparatus configured to amplify replica signals.

10. The system of any one of claims 6 to 9, wherein the control signal source further comprises timing circuitry configured to synchronize the second control signal with the first control signal.

11. The system of any one of claims 6 to 10, wherein the control signal source is configured to receive at least one of the uplink data signal and the beacon modulation signal from at least one external source.

12. The system of any one of claims 6 to 9, wherein the control signal source is configured to generate at least one of the uplink data signal and the beacon modulation signal.

13. The system of any one of the preceding claims, further comprising at least one delivery optical fibre and output optics at a distal end of the delivery optical fibre, wherein the at least one delivery optical fibre is one of a large mode-area microstructured optical fibre, a hollow core microstructured optical fibre or a step-index optical fibre, and wherein the at least one delivery optical fibre is configured to deliver the optical beacon and data signal for transmission to the output optics.

14. An optical ground terminal comprising an optical ground terminal optical transmission system as claimed in any one of claims 1 to 13.
